# EUROPEAN PATENT APPLICATION

(11) **EP 2 615 539 A2**
(43) Date of publication of application: **17.07.2013**
(21) Application number: 13151357.4
(22) Date of filing: 15.01.2013
(51) Int. Cl.: G06F 3/12, G06K 15/00

(54) **Image forming apparatus**

(30) Priority: 16.01.2012 KR 20120004839
(71) Applicant: Samsung Electronics Co., Ltd., Gyeonggi-do 443-742 (KR)
(72) Inventor: Eom, Yoon Seop, Suwon-si (KR)
(74) Representative: Waddington, Richard

(57) **Abstract**

An image forming apparatus is provided. The apparatus includes a main controller board (100) having a control unit (101) corresponding to a basic model of a product, and a sub memory unit (110) configured to communicate with the control unit. The derivative model information, which is related to a derivative model that is derived from the basic model, is stored at the sub memory unit (110), and the control unit is configured to receive the stored derivative model information by communicating with the sub memory unit. An operation of the image forming apparatus is controlled based on the received derivative model information, thereby supporting a plurality of series models in an integrated manner by use of the main controller board of a basic model without manufacturing a main board for each of the series models of the image forming apparatus while the series models are provided with the functionalities that are similar to each other.

## Description

### BACKGROUND

### 1. Field

Embodiments of the present disclosure relate to an image forming apparatus, and more particularly, to an image forming apparatus having a main controller board configured to control an operation of the image forming apparatus.

### 2. Description of the Related Art

A model of an image forming apparatus may be largely derived based on a categorization of a printing speed. In addition, the model may be derived based on whether various option configuration devices are mounted at the model.

A main controller board configured to control the operation of the image forming apparatus may be designed in an optimal manner to be suitable for the model configuration of the image forming apparatus.

With respect to software of the image forming apparatus, a source program may be coded differently for different model option configurations. With respect to engine firmware, a source program may be configured differently for different speeds, since the timing in controlling electronic apparatuses such as various motors and sensors may be different.

For example, assuming that the derivative model is largely classified into two model groups based on speed, and that each of the two speed model groups is classified into four types of the models based on whether options are mounted at a body of each speed model, up to eight types a main controller board may be required.

The management of the total of eight types of the main controller board may be difficult. For example, if a design change occurs, all of the eight types of the main controller board need to be design-modified and verified again. Thus, a large loss in efficiency of developing the above occurs.

When several derivative models having similar functionalities are being developed, since the functionality of each of the derivative models may be slightly different to each other, conventionally, a main controller board is separately developed for each derivative model and is applied to each derivative model. Conventionally, in a case of a series of models provided with slight changes in the functionalities thereof, while the basic motions and functionalities may be similar to each other, the inconvenience of manufacturing a main controller board for the each of the series models to be used is present, and with respect to developing boards, verifying quality, and providing service is costly and inefficient.

### SUMMARY

It is an aspect of the present disclosure to provide an image forming apparatus capable of supporting a plurality of series models in an integrated manner by use of a main controller board of a basic model without manufacturing a main board for each of the derivative models of the image forming apparatus, the derivative models provided with the functionalities that are similar to each other.

Additional aspects of the disclosure will be set forth in part in the description which follows and, in part, will be obvious from the description, or may be learned by practice of the disclosure.

According to the present invention there is provided an apparatus and method as set forth in the appended claims. Other features of the invention will be apparent from the dependent claims, and the description which follows.

In accordance with an aspect of the present disclosure, an image forming apparatus includes a main controller board and a sub memory unit. The main controller board may have a control unit corresponding to a basic model of a product. The sub memory unit may be configured to communicate with the control unit. Derivative model information, which is related to a derivative model that is derived from the basic model, may be stored at the sub memory unit. The control unit may be configured to receive the stored derivative model information by communicating with the sub memory unit, and to control an operation of the image forming apparatus based on the received derivative model information.

The derivative model information stored at the sub memory unit may include at least one of information on a status of a system configuration, a serial number of the image forming apparatus, and a manufacturer's number.

The derivative model information stored at the sub memory unit comprises at least one of information related to equipping with options, information on printing speed, and information on a departure area.

The control unit and the sub memory unit may be configured to communicate data in an encrypted form.

The control unit and the sub memory unit may be configured to communicate by an I2C communication.

The sub memory unit may be detachably connected to the main controller board.

The control unit may be configured to control an image forming speed of the image forming apparatus based on the received derivative model information.

The image forming apparatus may further include an engine controller board. The engine controller board may be configured to store derivative model information, which is different from the derivative model information stored at the sub memory unit, and configured to control an operation of the image forming unit to perform an image formation. The control unit may be configured to determine final model information based on the derivative model information stored at the sub memory unit and the derivative model information stored at the engine controller board, and to control the operation of the image forming apparatus based on the final model information, which is determined.

The engine controller board may include an engine control unit and an engine model setting unit. The engine control unit may be configured to recognize the derivative model information based on a voltage level of a plurality of input ports connected to the engine model setting unit, and to transmit the recognized derivative model information to the control unit according to a command of the control unit.

The image forming apparatus may further include a scan board. The scan board may be configured to store derivative model information, which is different from the derivative model information stored at the sub memory unit, and configured to control an operation of the scan unit to scan a document. The control unit may be configured to determine final model information based on the derivative model information stored at the sub memory unit and the derivative model information stored at the scan board, and to control the operation of the image forming apparatus based on the final model information, which is determined.

The scan board may include a scan control unit and a scan model setting unit. The scan control unit may be configured to recognize the derivative model information based on a voltage level of a plurality of input ports connected to the scan model setting unit, and to transmit the recognized derivative model information to the control unit according to a command of the control unit.

In accordance with an aspect of the present disclosure, an image forming apparatus includes a main controller board, a sub memory unit, an engine controller board, and a scan board. The main controller board may have a control unit corresponding to a basic model of a product. The sub memory unit may be configured to communicate with the control unit, and configured to store a first derivative model information, which is related to a derivative model that is derived from the basic mode. The engine controller board may be configured to store a second derivative model information, which is related to a derivative model that is derived from the basic model, and configured to control an operation of the image forming apparatus to perform an image formation. The scan board may be configured to store a third derivative model information, which is related to a derivative model that is derived from the basic model, and configured to control an operation of a scan unit to scan a document. The control unit may be configured to determine a final model information based on the first derivative model information, the second derivative model information and the third derivative model information, and to control the operation of the image forming apparatus based on the final model information, which is determined.

The engine controller board may include an engine control unit and an engine model setting unit. The engine control unit may be configured to recognize the second derivative model information based on a voltage level of a plurality of input ports connected to the engine model setting unit, and to transmit the second derivative model information, which is recognized, to the control unit according to a command of the control unit.

The scan board may include a scan control unit and a scan model setting unit. The scan control unit may be configured to recognize the third derivative model information based on a voltage level of a plurality of input ports connected to the scan model setting unit, and to transmit the third derivative model information, which is recognized, to the control unit according to a command of the control unit.

By using of a main controller board of a basic model without separately manufacturing a main board for each of the several derivative models of an image forming apparatus while the derivative models are provided with the functionalities that are similar to each other, because of the common use of the main controller board, the time consumed in designing the board, the time consumed in performing a quality verification test, and the time consumed in modifying and supplementing the board may be reduced.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 illustrates an image forming apparatus in accordance with an embodiment of the present disclosure.
FIG. 2 illustrates an image forming apparatus in accordance with an embodiment of the present disclosure.
FIG. 3 illustrates a main controller board of the image forming apparatus and other boards connected to the main controller board in accordance with an embodiment of the present disclosure.
FIG. 4 illustrates a main controller board of the image forming apparatus determining the information of a model through a sub memory unit in accordance with an embodiment of the present disclosure.
FIG. 5 illustrates a main controller board of the image forming apparatus determining the information of a model through the sub memory unit and an engine controller board in accordance with an embodiment of the present disclosure.
FIG. 6 illustrates a main controller board of the image forming apparatus determining the information of a model through the sub memory unit and a scan board in accordance with an embodiment of the present disclosure.
FIG. 7 illustrates a main controller board of the image forming apparatus recognizing the information of a model of the engine controller board in accordance with an embodiment of the present disclosure.
FIG. 8 illustrates a main controller board of the image forming apparatus recognizing the information of a model of the scan board in accordance with an embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

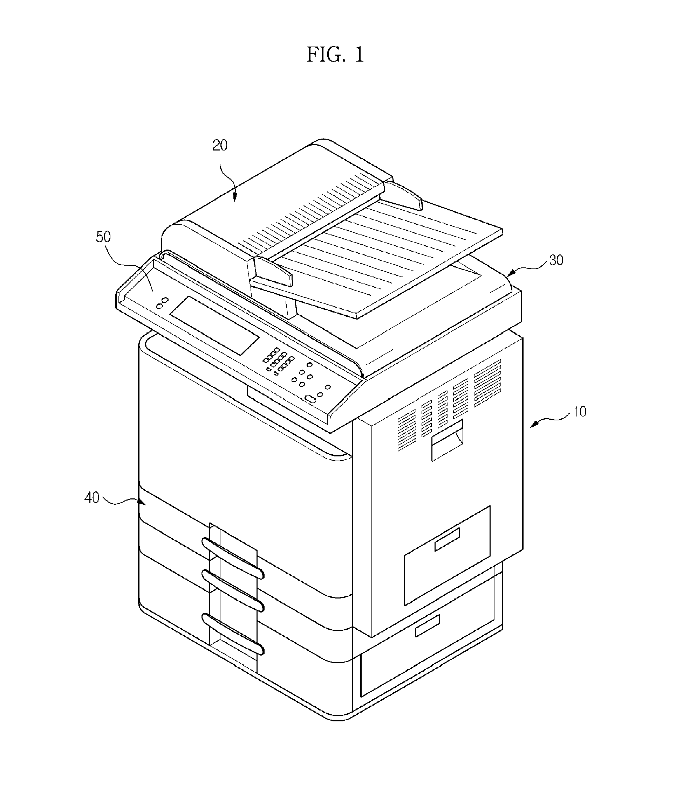

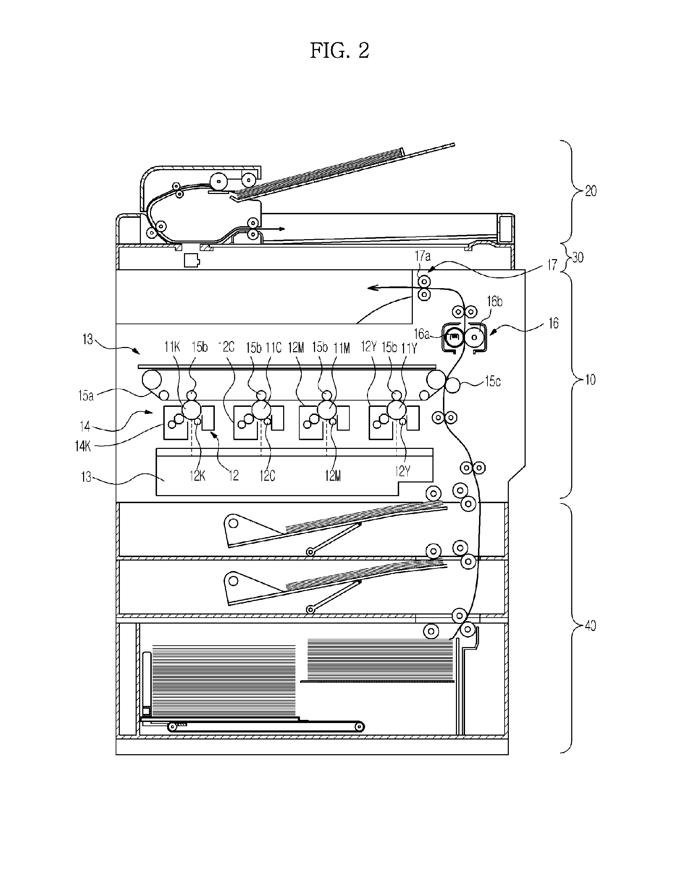

FIG. 1 illustrates an image forming apparatus in accordance with an embodiment of the present disclosure. FIG. 2 illustrates an image forming apparatus in accordance with an embodiment of the present disclosure. An image forming apparatus in accordance with the present disclosure, for an example, may be a multi-function apparatus having a photocopying function, a scanning function, and a printing function.

As illustrated in FIG. 1 and FIG. 2, the image forming apparatus includes an image forming unit 10, an auto document feeder (ADF) 20, a scan unit 30 to scan an image recorded on a document, a printing medium supplying unit 40, and an operating panel unit 50.

The image forming unit 10 forms an image, and prints the image on a printing medium. The image forming unit 10 forms an image according to the signal being input from the scan unit 30 or according to the signal being input from an outside apparatus such as a host computer, and prints the image, which is formed, on a printing medium.

The image forming unit 10 includes various components configured to form an image, for example, photoreceptors 11K, 11C, 11M, and 11Y, a charging unit 12, a laser scanning unit 13, a developing unit 14, a transferring unit 15, a fusing unit 16, and a discharging unit 17.

The charging unit 12 charges the photoreceptors 11K, 11C, 11M, and 11Y with predetermined potentials.

The laser scanning unit 13 radiates the lights, which correspond to the image information, at the photoreceptors 11K, 11C, 11M, and 11Y, and forms electrostatic latent images on the surfaces of the photoreceptors 11K, 11C, 11M, and 11Y

The developing unit 14 forms developer images by supplying developers at the electrostatic latent images formed at the photoreceptors 11K, 11C, 11M, and 11Y The developing unit 14 may include four units of developing apparatus 13K, 13C, 13M, and 13Y at which the developers provided with different colors to each other, for example, the black 'K' developer, the cyan 'C' developer, the magenta 'M' developers, and the yellow 'Y' developers, respectively, are accommodated.

The transferring unit 15 includes an intermediate transferring belt 15a, a first transferring roller 15b, and a second transferring roller 15c. The developer images formed at the photoreceptors 11K, 11C, 11M, and 11Y are transferred to the intermediate transferring belt 15a by the first transferring rollers 15b, and the images of the intermediate transferring belt 15a are supplied from the printing medium supplying unit 40 to be transferred on the printing medium that passes in between the second transferring roller 15c and the intermediate transferring belt 15a.

The fusing unit 16 includes a heating roller 16a and a pressing roller 16b. The printing medium that is passed through the transferring unit 15 passes in between the heating roller 16a and the pressing roller 16b, and at this time, by the heat and the pressure, an image is fixed to the printing medium.

The discharging unit 17 includes a discharging roller 17a. The printing medium that is passed through the fusing unit 16 is discharged to an outside by the discharging roller 17a.

The auto document feeder 20 supplies a document by releasing the stacked documents at one printing medium at a time.

The scan unit 30 scans the document supplied by the auto document feeder 20, or scans the document placed on a plane panel of the scan unit 30 by a user. The scan unit 20 performs a photocopying work of a scanning work of the document according to a photocopying command or a scanning command.

The printing medium supplying unit 40 may be disposed at a lower portion side of a body of the image forming apparatus, and is capable of storing a plurality of pieces of printing medium.

The operating panel unit 50 is configured to interface with a user, and displays a screen, for example, so that the user may select and command a desired work. The operating panel unit 50 may be input with a work command such as a printing, a photocopying, or a scanning from the user.

At the operating panel unit 50, a user interface screen may be displayed, and a touch panel function may be installed at the control unit 50 so that a button formed inside the user interface screen may be manipulated by the finger of a user. The user may select a desired work by manipulating the button that corresponds to the function, such as a printing, a photocopying, or a scanning, which is displayed at the user interface screen.

Thus, the user may input a photocopying, a scanning, or a printing command through the operating panel unit 50, for the photocopying or the scanning work with respect to the printing medium placed on the plane panel of the scan unit 20, or the printing work to print data on the printing medium stored at the printing medium supplying unit 40.

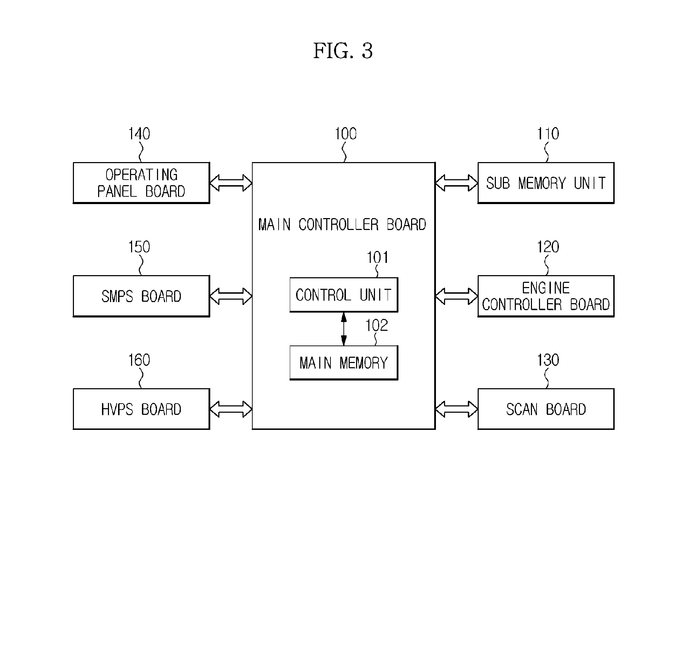

FIG. 3 illustrates a main controller board of the image forming apparatus and other boards connected to the main controller board in accordance with an embodiment of the present disclosure.

As illustrated on FIG. 3, the image forming apparatus includes a main controller board 100. The main controller board 100 may be configured to control the overall operation of the image forming apparatus. The main controller board is a main board that may be designed to be suitable for the image forming apparatus of a basic model.

One of a sub memory unit 110, an engine controller board 130, and a scan board 120 may be communicatively connected, or a combination of the sub memory unit 110, the engine controller board 130, and the scan board 120 may be communicatively connected to the main controller board 100. In addition, other than the above components, an operating panel board 140, a SMPS board 150, and a HVPS board 160 may be communicatively connected to the main controller board 100.

The main controller board 100 includes a control unit 101 and a main memory 102. The control unit 101 may be a main processor, and configured to control the overall operation of the main controller board 100. At the main memory 102, various information needed for the operation of the image forming apparatus may be stored.

The sub memory unit 110 configured as an easily attachable/detachable manner while interfacing to the main controller board 100 in a form of a connector. A wire method or a harness method may also be used.

The sub memory 110 stores the data values, such as the lifespan information on various consumable components, the status information on the system configuration, the serial number of the system, and the manufacturer's number, that are needed to be managed at the system.

The data value of the sub memory 110 may add the 'N' number of model specifications, and the type of the specifications may include the model classification with respect to whether various options are equipped, the model classification with respect to the printing speed, and the model classification with respect to the departure area of the set.

For example, the sub memory unit 110 include two units of memories. One memory may be a memory device configured to store/back up the lifespan information on various consumable components, and the other memory may be a memory device configured to store information values that are needed to be managed at the system, such as the status information on the system configuration, the serial number of the system, and the manufacturer's number. The two units of the memories may be combined as one.

The sub memory unit 110 may be configured to prevent a hacking by encrypting the data values for the purpose of security, and is capable of implementing a communication, for example, an Inter-Integrated Circuit (I2C) communication, with the control unit of the main controller board 100. The I2C may be a two-way serial bus standard configured to be operated by connecting in between two chips by use of only two strips of signal lines. The main controller board 100 and the sub memory unit 110, other than the I2C communication method, may directly communicate by use of a UART (Universal Asynchronous Receiver/Transmitter) method or by use of a GPIO (General Purpose Input/Output) port.

The engine controller board 120 controls the operation of the image forming unit 10 that performs an image forming operation.

The scan board 130 performs a role to scan a document. The scan board 130 and the main controller board 100, other than the I2C communication method, may directly communicate by use of the UART method or by use of the GPIO port.

The operating panel board 140 may include an operating panel printed circuit board assembly that may be referred to as an OPE (Operating Panel Equipment) PBA.

The SMPS (Switching Mode Power Supply) board supplies a voltage, for example, +5V and +24V from the 110V/220V power input to a main PBA 201 and to other boards.

The HVPS (High Voltage Power Supply) board supplies a high voltage to various apparatus, which are needed with the high voltage at the image forming apparatus, such as the photoreceptors, the charging unit, the developing unit, and the transferring unit.

A configuration of the main controller board may be different for each model of the image forming apparatus, and thus the timing in controlling of the engine firmware varies, as well as the number of the electronic parts under control. For example, assuming that the derivative model is largely classified into two model groups based on speed, and that each of the two speed model groups is classified into four types of the models based on whether options are equipped at a body of each speed model, eight types of the main controller board are possible. The management of the eight types of the main controller board may be difficult, and in a case of a design change, all of the eight types of the main controller board may be needed to be modified and verified again, and thus, with respect to the efficiency in developing the above, a huge loss may be occurred.

In an embodiment of the present disclosure, the main controller board 100, while having the main board of a basic model as a common main board, with reference to the recognition of the component of the model determines the final model configuration status by using at least one of the data value of the sub memory unit 110, the model configuration-input port setting value of the engine controller board 120, and the model configuration-input port setting value of the scan board 130.

According to the circumstance of the model, a controlling on an engine and a video kernel program may be performed.

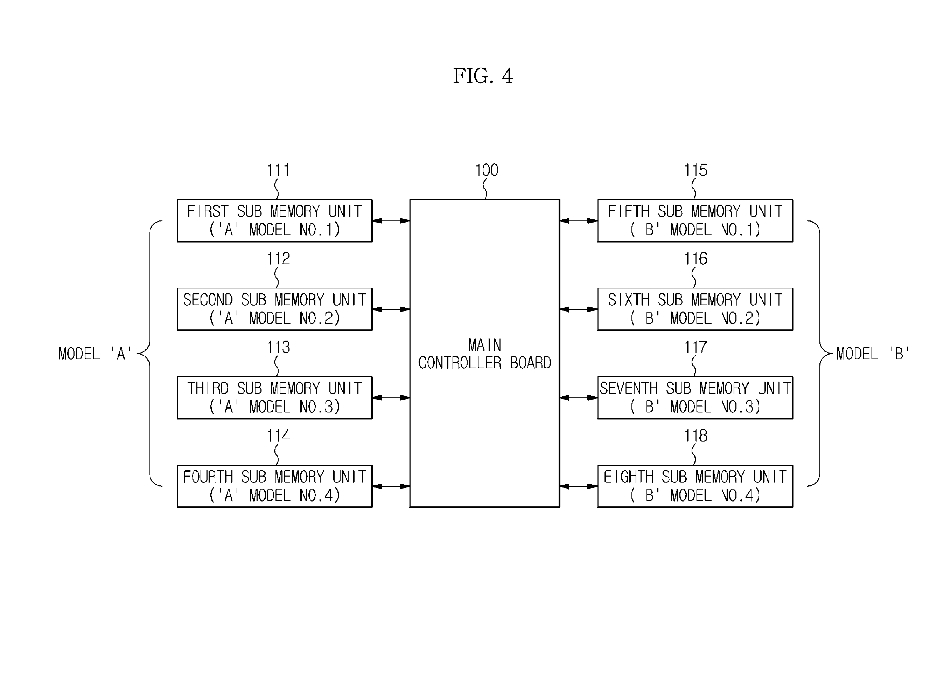

FIG. 4 illustrates a main controller board of the image forming apparatus determining the information of a model through a sub memory unit in accordance with an embodiment of the present disclosure.

As illustrated on FIG. 4, the sub memory unit configured to store derivative model information, which is referred to as a setting status of a derivative model, may be connected to the main controller board 100 of a basic model. The main controller unit 100 receives the derivative model information stored at the sub memory, and controls an operation of the image forming apparatus accordingly, based on the received derivative model information. The controlling of the operation of the image forming apparatus includes the controlling of the image forming speed of the engine system, or the controlling of the operation of the functions added to the basic model.

Assuming that the derivative model of the image forming apparatus is provided with eight types of the model (four types of the 'A' model and four types of the 'B' model), the sub memory includes one of a first sub memory unit 111, a second sub memory unit 112, a third sub memory unit 113, a fourth sub memory unit 114, a fifth sub memory unit 115, a sixth sub memory unit 116, a seventh sub memory unit 117, and an eighth sub memory unit 118.

The information on the 'A' model may be stored at the first sub memory unit 111 to the fourth sub memory unit 114. The information on the 'A' model may be provided with the total of four types of the model information, including the information on the first 'A' model (the 'A' model No. 1), the information on the second 'A' model (the 'A' model No. 2), the information on the third 'A' model (the 'A' model No. 3), and the information on the fourth 'A' model (the 'A' model No. 4).

At the first sub memory unit 111, the information on the first 'A' model (the 'A' model No. 1) may be stored, at the second sub memory unit 112, the information on the second 'A' model (the 'A' model No. 2) may be stored, at the third sub memory unit 113, the information on the third 'A' model (the 'A' model No. 3) may be stored, and at the fourth sub memory unit 114, the information on the fourth 'A' model (the 'A' model No. 4) may be stored.

The information on the 'B' model may be stored at the fifth sub memory unit 115 to the eighth sub memory unit 118. The information on the 'B' model may be provided with the total of four types of the model information, including the 'B' model No. 1, the 'B' model No. 2, the 'B' model No. 3, and the 'B' model No. 4.

At the fifth sub memory unit 115, the information on the fifth 'B' model (the 'B' model No. 1) may be stored, at the sixth sub memory unit 116, the information on the sixth 'B' model (the 'B' model No. 2) may be stored, at the seventh sub memory unit 117, the information on the seventh 'B' model (the 'B' model No. 3) may be stored, and at the eighth sub memory unit 118, the information on the eighth 'B' model (the 'B' model No. 4)may be stored.

The information of the corresponding model being stored at the each sub memory unit from the first sub memory unit 111 to the eighth sub memory init 118 may include the status information on the system configuration, the serial number of the system, and the manufacturer's number.

At the sub memory units from the first sub memory unit 111 to the eighth sub memory unit 118, the model classification with respect to whether various options are mounted, the model classification with respect to printing speed, and the model classification with respect to the departure area of the set may be included.

The main controller board 100 exchanges information through the I2C communication with a sub memory unit from the first memory unit 111 to the eighth sub memory unit 118 that are provided at the image forming apparatus system. Through the I2C communication as such, the main controller board 100 receives the derivative model information that is stored at the sub memory unit from the sub memory unit.

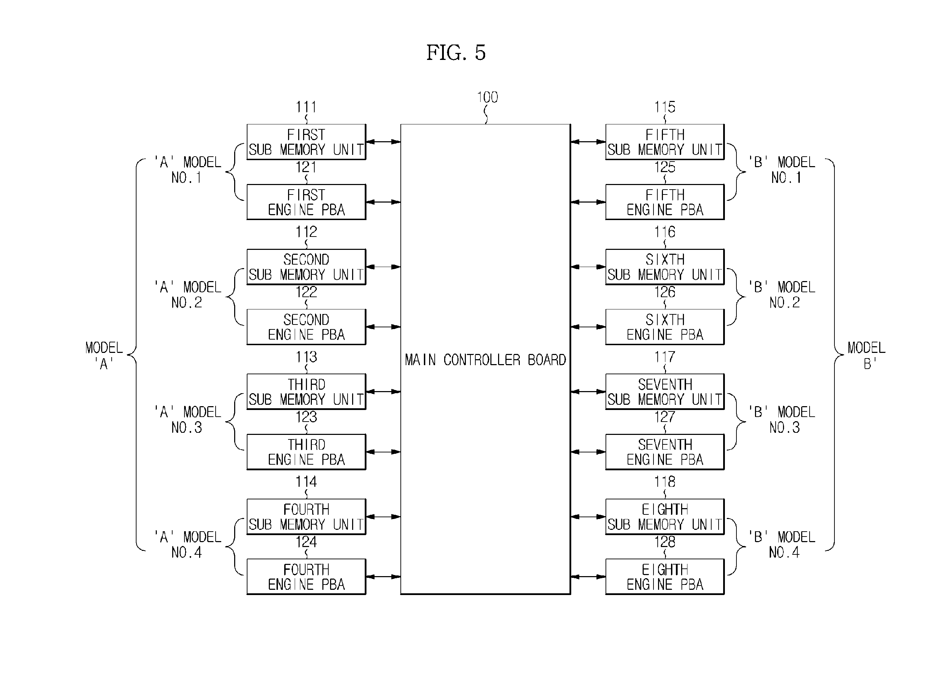

FIG. 5 illustrates a main controller board of the image forming apparatus determining the information of a model through the sub memory unit and an engine controller board in accordance with an embodiment of the present disclosure.

As illustrated on FIG. 5, the sub memory unit configured to store a first derivative model information, which is referred to as the status value of the setting of a derivative model, and the engine controller board (the engine PBA) configured to output a second derivative model information, which is referred to as the status value of the model configuration of the engine controller board , are connected to the main controller board 100 of a basic model. The main controller board 100 obtains the first derivative model information from the sub memory, and obtains the second derivative model information from the engine controller board, determines final model information based on the first derivative model and the second derivative model, and controls the operation of the image forming apparatus accordingly based on the final model information.

Assuming that the derivative model of the image forming apparatus is provided with eight types of the model (four types of the 'A' model and four types of the 'B' model), the sub memory 110 includes one memory unit from the first sub memory unit 111 to the eighth sub memory unit 118, and the engine controller board 120 may include a first engine controller board 121 to an eighth engine controller board 128.

Each of the sub memory units and each of the engine controller boards are a pair, and the pair forms one type of model.

For example, with respect to the information on the derivative model each stored at the first sub memory unit 111 and the first engine controller board 121, the present information of the model shows the information on the first 'A' model (the 'A' model No. 1).

For example, the main controller board 100 may categorize the type of the model of the engine controller board 120 substantially into two groups of types according to speed, in other words, into a low-speed model and a high-speed model (the 'A' model and the 'B' model), and with reference to the remaining information on the model, reads the derivative model information, which is stored at each sub memory of the sub memory units, thereby determining, the final information on the model.

The engine controller unit 120 may be configured without the sub memory unit 110.

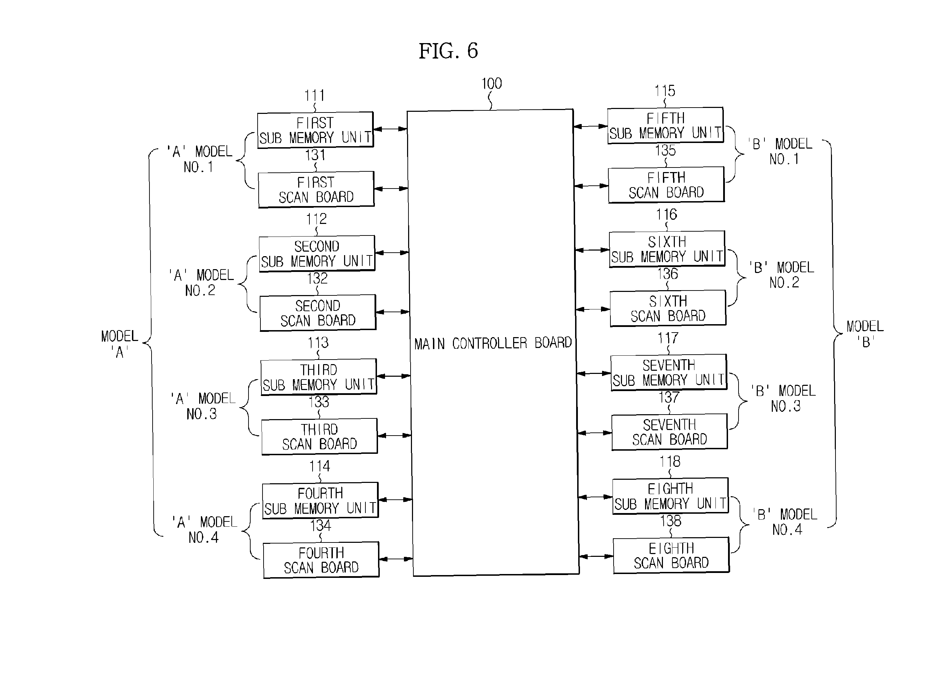

FIG. 6 illustrates a main controller board of the image forming apparatus determining the information of a model through the sub memory unit and a scan board in accordance with an embodiment of the present disclosure.

As illustrated on FIG. 6, the sub memory unit may be configured to store the first derivative model information, which is referred to as the status value of the setting of the derivative model, and the scan board may be configured to output third derivative model information, which is referred to as the status value of the configuration of the model of the scan board 130, are connected to the main controller board 100 of a basic model. The main controller board 100 obtains the first derivative model information from the sub memory, and obtains the third derivative model information from the scan board, and based on the first and the third derivative model information, the final information on the model is determined, and the operation of the image forming apparatus is controlled accordingly based on the final information on the model, which is determined.

Assuming that the derivative model of the image forming apparatus is provided with eight types of the model (four types of the 'A' model and four types of the 'B' model), the sub memory includes one memory unit from the first sub memory unit 111 to the eighth sub memory unit 118, and the scan board may include a first scan board 131 to an eighth scan board 138. The 'A' model group may be referred to as the model group having low-speed printing speed, and the 'B' model group may be referred to as the model group having high-speed printing speed.

Each of the sub memory units and each of the scan boards may be a pair, and the pair forms one type of model.

For example, with respect to the information on the derivative model each stored at the first sub memory unit 111 and the first scan board 131, the information of the model shows the information on the first 'A' model (the 'A' model No. 1).

For example, the main controller board 100 may categorize the type of the model of the of the scan board 130 substantially into the two groups of types according to whether a fax is present or a fax is not present (the 'A' model and the 'B' model). With reference to the remaining information on the model, read the derivative model information, which is stored at each sub memory of the sub memory units 110, thereby determining the final information on the model.

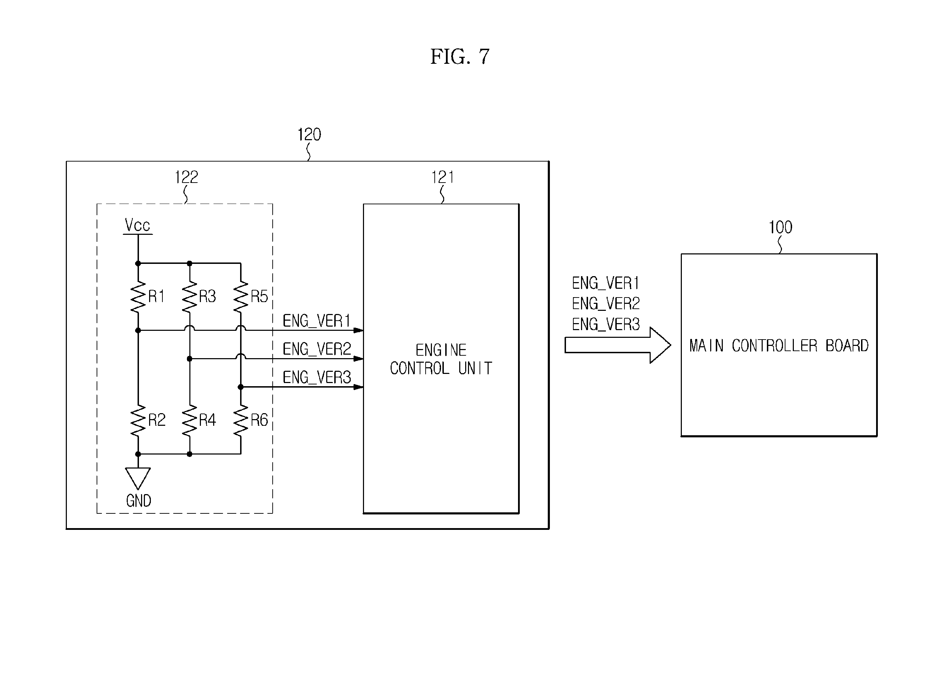

FIG. 7 illustrates a main controller board of the image forming apparatus recognizing the model information of the engine controller board in accordance with an embodiment of the present disclosure.

As illustrated on FIG. 7, the engine controller board 120 includes the engine control unit 121 and the engine model setting unit 122.

The engine control unit 121 outputs the derivative model information, which may be set by the engine model setting unit 122, to the main controller board 100. The derivative model information may be the information on the derivative model engine controller board 120, or the information on the derivative model of the image forming apparatus.

The engine controller board 120 may include a memory configured to store the derivative model information, which is set by the engine model setting unit 122. The memory may be provided at an inside the engine control unit 121, or may be provided at an outside the engine control unit 121.

The engine model setting unit 122 outputs the three types of signals (ENG_VER1, ENG_VER2, and ENG_VER3) according to the voltage distribution of the resistances R1 to R6. The engine control unit 121 recognizes the derivative model information by checking the level of the signals of the input port through which the three types of the signals are input.

Based on the voltage level, that is, a high level or a low level, of the three types of the signal output, the derivative model information of the engine controller board 120 is set. According to the 3-bit combination of the high status and the low status (from 000 to 111), the categorization of the eight types of the model may be possible. When the types of the model are increased, the number of the signals may be increased/decreased at the engine model setting unit 122 according to the number of the corresponding bits.

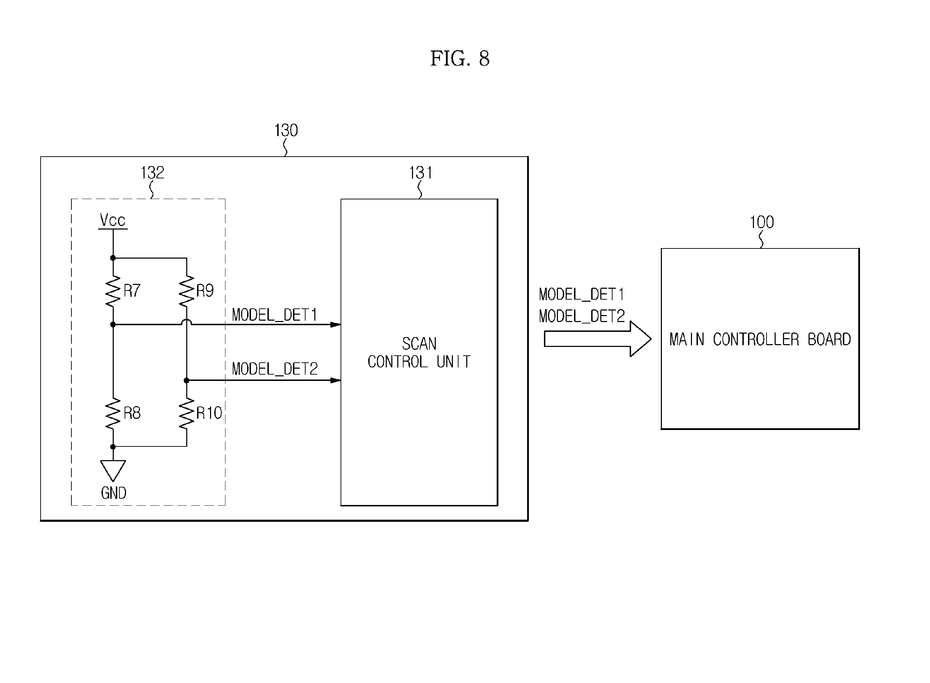

FIG. 8 illustrates a main controller board of the image forming apparatus recognizing the model information of the scan board in accordance with an embodiment of the present disclosure.

As illustrated on FIG. 8, the scan board 130 includes the scan control unit 131 and the scan model setting unit 132.

The scan control unit 131 outputs the derivative model information, which is set by the scan model set unit 132, to the main controller board 100. The derivative model information may be the derivative model information of the scan board 130, or the derivative model information of the image forming apparatus.

The scan board 130 may include a memory configured to store the derivative model information, which is set by the scan model set unit 132, of the scan board 130. The memory may be provided at an inside the scan control unit 131, or may be provided at an outside the scan control unit 131.

The scan model setting unit 132 outputs the two types of signals (MODEL_DET1 and MODEL_DET2) according to the voltage distribution of the resistances R7 to R10. The scan control unit 131 checks the level of the signals of the input port through which the two types of the signals are input, thereby recognizing the derivative model information.

Based on the voltage level, that is, a high level or a low level, of the two types of the signal output, the derivative model information of the scan board 130 is set. According to the 2-bit combination of the high status and the low status (from 00 to 11), the categorization of the four types of the model may be possible. When the types of the model is increased, the number of the signals may be increased/decreased at the scan model setting unit 132 according to the number of the corresponding bits.

The derivative model information may be stored or set at the sub memory unit, at the engine controller board, or at the scan board, but are not limited hereto, and may be stored or set at a control board of an option unit mounted at the image forming apparatus.

Although a few embodiments of the present disclosure have been shown and described, it would be appreciated by those skilled in the art that changes may be made in these embodiments without departing from the principles of the disclosure, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus, comprising:
a main controller board having a control unit corresponding to a basic model of a product; and
a sub memory unit configured to communicate with the control unit,
wherein derivative model information, which is related to a derivative model that is derived from the basic model, is stored at the sub memory unit, and
the control unit is configured to receive the stored derivative model information by communicating with the sub memory unit, and to control an operation of the image forming apparatus based on the received derivative model information.

2. The image forming apparatus of claim 1, wherein:
the derivative model information stored at the sub memory unit comprises at least one of information on a status of a system configuration, a serial number of the image forming apparatus, and a manufacturer's number.

3. The image forming apparatus of claim 2, wherein:
the derivative model information stored at the sub memory unit comprises at least one of information related to equipping with options, information on printing speed, and information on a departure area.

4. The image forming apparatus of claim 1, wherein:
the control unit and the sub memory unit are configured to communicate data in an encrypted form.

5. The image forming apparatus of claim 4, wherein:
the control unit and the sub memory unit are configured to communicate by an Inter-Integrated Circuit (I2C) communication.

6. The image forming apparatus of claim 1, wherein:
the sub memory unit is detachably connected to the main controller board.

7. The image forming apparatus of claim 1, wherein:
the control unit is configured to control an image forming speed of the image forming apparatus based on the received derivative model information.

8. The image forming apparatus of claim 1, further comprising:
an engine controller board configured to store derivative model information, which is different from the derivative model information stored at the sub memory unit, and configured to control an operation of the image forming unit to perform an image formation,
wherein the control unit is configured to determine final model information based on the derivative model information stored at the sub memory unit and the derivative model information stored at the engine controller board, and to control the operation of the image forming apparatus based on the final model information, which is determined.

9. The image forming apparatus of claim 8, wherein:
the engine controller board comprises an engine control unit and an engine model setting unit, and
the engine control unit is configured to recognize the derivative model information based on a voltage level of a plurality of input ports connected to the engine model setting unit, and to transmit the recognized derivative model information to the control unit according to a command of the control unit.

10. The image forming apparatus of claim 1, further comprising:
a scan board configured to store derivative model information, which is different from the derivative model information stored at the sub memory unit, and configured to control an operation of the scan unit to scan a document,
wherein the control unit is configured to determine final model information based on the derivative model information stored at the sub memory unit and the derivative model information stored at the scan board, and to control the operation of the image forming apparatus based on the final model information, which is determined.

11. The image forming apparatus of claim 10, wherein:
the scan board comprises a scan control unit and a scan model setting unit, and
the scan control unit is configured to recognize the derivative model information based on a voltage level of a plurality of input ports connected to the scan model setting unit,
and to transmit the recognized derivative model information to the control unit according to a command of the control unit.
